# EUROPEAN PATENT APPLICATION

(11) **EP 4 553 657 A1**
(43) Date of publication of application: **14.05.2025**
(21) Application number: 23208795.7
(22) Date of filing: 09.11.2023
(51) Int. Cl.: G06F 9/50, F03D 7/04

(54) **A METHOD AND A SYSTEM FOR OPTIMISING USE OF A PROCESSING RESOURCE IN A WIND ENERGY INSTALLATION**

(71) Applicant: VESTAS WIND SYSTEMS A/S, 8200 Aarhus N (DK)
(72) Inventor: Skjelmose, Mads Rajczyk, 8240 Risskov (DK); Nayebi, Kouroush, 7430 Ikast (DK)
(74) Representative: Vestas Patents Department

(57) **Abstract**

A method and a system for optimising use of a processing resource in a wind energy installation (1) is disclosed. A plurality of processing resource requiring tasks related to control of the wind energy installation (1) are identified. For each processing resource requiring task, a minimum acceptable service level related to the task, and at least one action which causes a decrease in processing resource consumption related to the task while ensuring that the minimum acceptable service level is met, are defined. The processing resource requiring tasks are ranked, so as to create a prioritized list (10) of processing resource requiring tasks. In the case that a monitored processing load level exceeds a first threshold level, at least one of the processing resource requiring tasks is selected in accordance with the prioritized list (10), and least one of the actions defined for the at least one selected task is performed.

## Description

### FIELD OF THE INVENTION

The present invention relates to a method for optimising use of a processing resource in a wind energy installation, e.g. in a wind power plant comprising a plurality of wind turbines. The method according to the invention allows for optimal use of the available processing resource without compromising control of the wind energy installation. The invention further relates to a system for performing the method.

### BACKGROUND OF THE INVENTION

When operating and controlling a wind energy installation, such as a wind turbine or a wind power plant comprising a plurality of wind turbines, it is necessary to perform various tasks, each requiring processing power. To this end the wind energy installation is normally provided with at least one processing resource, e.g. in the form of at least one CPU. A given processing resource may be shared by various tasks and/or by various units performing the tasks. In this case it must be ensured that sufficient processing capacity is available when a given task is supposed to be performed. This is particularly important in the case that performing of the task may be considered critical with respect to control of the wind energy installation, e.g. with regard to safety, or with regard to fulfilling grid code requirements or other requirements or obligations towards a power grid or another external entity.

In order to ensure sufficient processing capacity, the processing capacity of the processing resources of the wind energy installation may be dimensioned so as to be able to handle a significant number of tasks simultaneously, e.g. all possible processing resource requiring tasks of the wind energy installation. However, situations where the full processing capacity of such processing resources is required will, under normal circumstances, only occur very rarely, if ever. Thus, dimensioning the processing capacity of the processing resources in this manner will result in a significant idle processing capacity for most of the time. This adds to the costs of establishing the wind energy installation.

On the other hand, if the processing resources are dimensioned with a significantly smaller processing capacity, e.g. reflecting normal average processing resource consumption of the wind energy installation, this may result in situations where a given processing resource requiring task can not be performed due to lack of processing capacity, and if this task is considered critical with regard to control of the wind energy installation, this may have a severe impact in the operation of the wind energy installation.

### DESCRIPTION OF THE INVENTION

It is an object of embodiments of the invention to provide a method for optimising use of a processing resource in a wind energy installation which minimises the requirements for processing capacity without compromising control of the wind energy installation.

It is a further object of embodiments of the invention to provide a system for optimising use of a processing resource in a wind energy installation which minimises the requirements for processing capacity without compromising control of the wind energy installation.

According to a first aspect the invention provides a method for optimising use of a processing resource in a wind energy installation, the method comprising the steps of:
- identifying a plurality of processing resource requiring tasks related to control of the wind energy installation,
- for each processing resource requiring task, defining a minimum acceptable service level related to the task, and defining at least one action which causes a decrease in processing resource consumption related to the task while ensuring that the minimum acceptable service level is met,

- ranking the processing resource requiring tasks, so as to create a prioritized list of processing resource requiring tasks,
- monitoring a processing load level of the processing resource and comparing the processing load level to a first threshold level,
- in the case that the monitored processing load level exceeds the first threshold level, selecting at least one of the processing resource requiring tasks in accordance with the prioritized list of processing resource requiring tasks, and performing at least one of the actions defined for the at least one selected task.

Thus, the method according to the first aspect of the invention is a method for optimising use of a processing resource in a wind energy installation. In the present context the term 'wind energy installation' should be interpreted to mean an installation being configured to generate energy, preferably electrical energy, from wind. Thus, the wind energy installation may, e.g., be a wind turbine or a wind power plant comprising a plurality of wind turbines.

In the present context the term 'processing resource' should be interpreted to mean a unit or entity being capable of performing processing of relevant data. The processing resource may, e.g., be or comprise at least one CPU.

In the method according to the first aspect of the invention, a plurality of processing resource requiring tasks related to control of the wind energy installation are identified. The identified tasks are tasks which need to be performed as part of controlling the wind energy installation, and where performing the task involves consuming processing power to be delivered by a processing resource. Thus, the identified tasks are all tasks which may be expected to draw on the processing capacity of the processing resource whenever the task is being performed.

For each of the identified processing resource requiring tasks, a minimum acceptable service level related to the task is identified. The minimum acceptable service level specifies what is as a minimum required when the task is performed, in order to ensure that control of the wind energy installation is not compromised. For instance, the minimum acceptable service level may include a minimum sampling rate, a maximum delay in processing, a minimum processing speed, a minimum data transfer rate, etc.

Furthermore, for each of the identified processing resource requiring tasks, at least one action is identified which causes a decrease in processing resource consumption related to the task while ensuring that the minimum acceptable service level is met. For instance, an action could be to decrease a sampling rate for data input for the task, e.g. a measured parameter, from a standard sampling rate to lower sampling rate. This will reduce the amount of data needed to be processed when performing the task, and the processing resource consumption related to the task will therefore also be reduced. However, reducing the sampling rate will also result in a more coarse or granular picture of the parameter being measured. Accordingly, the part of the control of the wind energy installation which relies on this task being performed will no longer follow changes in the measured parameter as closely, resulting in a less accurate control and therefore a lower service level.

It needs to be ensured that the action, i.e. the sampling rate in the example above, does not result in a situation where the minimum acceptable service level can not be met. Referring to the example above, the sampling rate should not be decreased to a level where there is a risk of compromising the control of the wind energy installation. For instance, the sampling rate should not be decreased to a level which is lower than a required response rate to changes in the measured parameter. Thus, the identified action could be decreasing the sampling rate to a level below the normal sampling rate and above a minimum acceptable sampling rate ensuring that appropriate control of the wind energy installation can be performed.

Next, the identified processing resource requiring tasks are ranked, so as to create a prioritized list of processing resource requiring tasks. The tasks may, e.g., be ranked with respect to criticality with regard to operation or control of the wind energy installation, expected reduction in processing resource consumption, expected reduction in service level, whether or not performing the task is time critical, etc.

During operation of the wind energy installation, a processing load level of the processing resource is monitored and compared to a first threshold level. As described above, operation and control of the wind energy installation requires various tasks to be performed, and some of these tasks consume processing power. The tasks will, as a default, be performed with default settings providing optimal control of the wind energy installation without taking into account the processing resource consumption associated therewith. The processing resource consumption of the tasks varies as a function of time, depending on which tasks are being performed and the consumption of the individual tasks at a given point in time. Thus, the total processing load level of the processing resource, being shared by the tasks, varies as a function of time.

The processing load level being monitored may, e.g., be a percentage of the full processing capacity of the processing resource, or it may be an absolute total processing load caused by tasks being performed at a given point in time. The first threshold level may be a processing load which, if exceeded, introduces a risk that available processing capacity is insufficient to ensure that critical tasks can be performed. For instance, the first threshold level may be 75%-90% of the full processing capacity of the processing resource.

Thus, in the case that the monitored processing load exceeds the first threshold level, this is an indication that the available processing capacity of the processing resource may not be sufficient to allow all tasks to continue being performed according to the default settings. Accordingly, when this occurs, at least one of the processing resource requiring tasks is selected in accordance with the prioritized list, and at least one of the actions defined for the at least one selected task is performed. As described above, this may be expected to result in a decrease in the total consumption of processing power of the processing resource, and therefore it is ensured that any critical processing resource requiring task can be safely performed. Furthermore, since the actions were defined in such a manner that minimum acceptable service levels of all tasks in the prioritized list can be met, this is obtained without compromising the control of the wind energy installation, albeit with a slightly reduced service level for the selected task(s). Finally, since the selection of the at least one task is performed in accordance with the prioritized list, it is ensured that the selected at least one task is/are the one(s) being least critical for the control of the wind energy installation, i.e. the reduction in processing load is obtained with the least possible impact on the control of the wind energy installation.

Thus, a processing resource with a relatively low processing capacity can be applied, thereby reducing the costs of the wind energy installation, without compromising the control or operation of the wind energy installation.

The step of, for each processing resource requiring task, defining a minimum acceptable service level and/or the step of ranking the processing resource requiring tasks may be performed in accordance with a grid code applying at a power grid to which the wind energy installation is connected.

In the present context the term 'grid code' should be interpreted to mean a technical specification which defines the parameters a facility connected to a public power grid has to meet in order to ensure safe, secure and economic proper functioning of the power grid. Typically, a grid specifies the required behaviour of a power generating facility during grid disturbances, including voltage regulation, power factor limits, reactive power supply, response to frequency changes in the power grid, 'ride through' requirements, etc. Accordingly, the grid code defines obligations of the wind energy installation towards the power grid. By performing the step of defining minimum acceptable service levels for the tasks and/or the step of ranking the tasks in accordance with the grid code applying at the power grid to which the wind energy installation is connected, it is efficiently ensured that such obligations can be fulfilled, also when the processing load is reduced as a consequence of performing actions related to selected tasks, as described above.

The processing resource requiring tasks may include active power loop sampling, reactive power loop sampling, power meter measurement sampling, communication tasks, status supervision and/or parameter supervision.

Active power loop sampling is a task in which the active power produced by the wind energy installation is monitored or measured and compared to an active power setpoint or maximum and minimum values of an acceptable active power range or deadband, at a specified sampling rate. This normally forms part of a control loop regarding the active power output of the wind energy installation which ensures that a required active power level is provided to the power grid. An action defined for the active power loop sampling task could be a reduction of the sampling rate to a level which results in a less accurate, but still acceptable, control of the active power output.

Reactive power loop sampling is a task similar to the active power loop sampling, and the remarks set forth above are therefore equally applicable here. However, in this case, the reactive power produced by the wind energy installation is monitored or measured, rather than the active power.

Power meter measurement sampling is a task in which the power produced by the wind energy installation is monitored or measured. This could, e.g., be used as an input for the active power loop and/or the reactive power loop. An action defined for the power meter measurement could be a reduction of the sampling rate at which the produced power is measured and supplied to relevant control loops. This will reduce the accuracy of the affected control loops, but not beyond an acceptable level.

Communication tasks within a wind energy installation are numerous, and may, e.g., include communication between sensors and control system, between various units of the wind energy installation, etc. Furthermore, the wind energy installation may communicate with external parties, such as data centres, SCADA servers, etc. An action defined for communication tasks could be a reduction in the rate at which certain communication signals are sent.

Status supervision is a task in which the status of various processes, control algorithms, hardware, etc., of the wind energy installation is monitored or supervised in order to ensure that everything is running and operating as expected. One example of such a supervision task is supervising the rise time for the reactive power control loop. Such supervision tasks may be considered non-critical for the control of the wind energy installation, and it may therefore by acceptable to dispense with the supervision for a limited period of time. Accordingly, an action defined for a status supervision tasks could be to discontinue one or more status supervision tasks, e.g. the status supervision tasks with the highest processing load, or a sampling rate may be reduced.

Parameter supervision is a task in which available and currently applying parameters are monitored or supervised in order to ensure that the parameters are appropriate and sufficient. For instance, it may be supervised whether or not a controller of the wind energy installation, e.g. a power plant controller of a wind power plant, is in the possession of correct and appropriate control parameter. Similar to the status supervision tasks described above, an action related to parameter supervision tasks could be to discontinue one or more parameter supervision tasks, e.g. the parameter supervision tasks with the highest processing load, or a sampling rate may be reduced.

Alternatively or additionally, any other suitable processing resource requiring task related to the control of the wind energy installation may be identified and included in the prioritized list.

The step of ranking the processing resource requiring tasks may comprise ranking the tasks according to criticality with respect to control of the wind energy installation. As described above, this ensures that the task being selected first in order to reduce the processing load is the one which is considered least critical with respect to control of the wind energy installation.

Alternatively or additionally, the ranking of the processing resource requiring tasks may take other considerations into account, such as expected impact on the reduction in processing load, expected decrease in service level, etc.

The method may further comprise the steps of:
- comparing the processing load level to a second threshold level, the second threshold level being higher than the first threshold level, and
- in the case that the processing load level exceeds the second threshold level, selecting at least one further processing resource requiring task in accordance with the prioritized list of processing resource requiring tasks, and performing at least one of the actions defined for the at least one further selected task.

According to this embodiment, in addition to comparing the processing load level to the first threshold level, it is also compared to a second threshold level being higher than the first threshold level. In the case that performing the at least one action related to the at least one processing resource requiring task that was initially selected is insufficient to keep the processing load level below the first threshold level, the processing load may continue to increase, despite the efforts being taken. This may cause the processing load level to increase to such an extent that the second threshold level is exceeded, indicating that there is an even higher risk that a situation where critical tasks may not be performed may arise.

Therefore, when this occurs, at least one further processing resource requiring task is selected in accordance with the prioritized list of processing resource requiring tasks, and at least one of the actions defined for the at least one further selected task is performed, essentially in the manner described above.

Thus, according to this embodiment, processing resource requiring tasks are sequentially selected in accordance with the prioritized list, and relevant actions performed, so as to obtain a required reduction of the processing load of the processing resource. This ensures that actions are only performed to the extent which is required in order to keep the processing load at an acceptable level, and thereby with minimal impact on the control of the wind energy installation.

It should be noted that the method may further comprise comparing the processing load level to one or more further threshold levels being higher than the second threshold level, so as to sequentially initiate more actions to be performed as the various threshold levels are reached.

The method may further comprise the steps of:
- comparing the processing load level to a third threshold level, the third threshold level being lower than the first threshold level, and
- in the case that the processing load level decreases below the third threshold level, discontinuing the at least one action defined for the at least one selected task.

According to this embodiment, following the selection of at least one tasks and performing at least one action related thereto, the processing load level is compared to a third threshold level being lower than the first threshold level. In the case that the processing load level decreases below the third threshold level, this is an indication that the available processing capacity is sufficient for the currently running tasks with standard settings, and that the reduction in processing load provided by performing the actions is no longer required. Therefore, when this occurs, the at least one action defined for the at least one selected task is discontinued. This could, e.g., include reinstated standard sampling rates and/or communication rates.

The method may further comprise the steps of, based on the performed actions, evaluating available processing power as compared to total required processing power of the processing resource requiring tasks related to control of the wind energy installation, and determining whether or not to upgrade the processing resource based on the evaluation.

In the case that the processing capacity required for handling normal tasks during control of the wind energy system is close to, or even exceeds, the maximum processing capacity of the processing resource, it may be expected that the processing load level of the processing resource will frequently exceed the first threshold level, causing selection of tasks and actions being performed. Therefore, by analysing the actions being performed, it can be derived whether or not the available processing power or processing capacity of the processing resource does in fact match the requirements of the wind energy system. If it is concluded that the available processing power or processing capacity is insufficient, an upgrade of the processing resource may be decided in order to increase the available processing power so as to better match the requirements.

A situation as described above may, e.g., arise if changes have been made to the wind energy installation which have an impact on the processing resource requirements, but without simultaneously adapting the processing resource. This could, e.g., be the case if one or more new wind turbines are added to a wind power plant, or if one or more wind turbines of a wind power plant are replaced by new wind turbine with higher processing resource requirements.

The wind energy installation may be a wind power plant comprising a plurality of wind turbines. According to this embodiment, the processing resource may be shared by the wind turbines of the wind power plant. For instance, the processing resource may form part of a power plant controller (PPC), a SCADA server, or another kind of shared digital infrastructure of the wind power plant.

According to a second aspect, the invention provides a system for optimising use of a processing resource in a wind energy installation, the system comprising:
- a prioritized list of processing resource requiring tasks related to control of the wind energy installation, the prioritized list defining, for each processing resource requiring task, a minimum acceptable service level related to the task and at least one action which causes a decrease in resource consumption related to the task while ensuring that the minimum acceptable service level is met,
- monitoring equipment for monitoring a processing load level of the processing resource, and
- a communication unit configured to generate and communicate command signals to units performing the resource requiring tasks, in accordance with the processing load level of the processing resource and the prioritized list,
wherein the system is configured to perform the method according to the first aspect of the invention.

Since the system according to the second aspect of the invention is configured to perform the method according to the first aspect of the invention, the remarks set forth above with reference to the first aspect of the invention are equally applicable here.

The system according to the second aspect of the invention comprises a prioritized list of processing resource requiring tasks related to control of the wind energy installation. The prioritized list may advantageously have been generated in the manner described above with reference to the first aspect of the invention, and it defines minimum acceptable service levels and actions related to the tasks, in the manner described above.

The system further comprises monitoring equipment for monitoring the processing load level of the processing resource, in the manner described above with reference to the first aspect of the invention.

Finally, the system comprises a communication unit configured to generate and communicate command signals to units performing the resource requiring tasks, in accordance with the processing load level of the processing resource and the prioritized list. Accordingly, when the system performs the method according to the first aspect of the invention, and the processing load level exceeds the first threshold level, at least one of the tasks is selected from the prioritized list, in the manner described above. The communication unit then generates command signals specifying the actions to be performed, and communicates these command signals to one or more units of the wind energy system being responsible for performing the at least one selected task. In response to receiving the command signals, the at least one unit performs the required at least one action, so as to effectuate the required reduction in processing load of the processing resource.

The system may be or comprise a power plant controller (PPC) of a wind power plant comprising a plurality of wind turbines. According to this embodiment, the wind energy installation may be the wind power plant, and the method according to the first aspect of the invention is performed at least partly by the PPC.

The system may further be configured to receive input regarding a grid code applying at a power grid to which the wind energy installation is connected. According to this embodiment, the prioritized list of processing resource requiring tasks may be generated while taking the locally applying grid code into consideration. This has already been described above with reference to the first aspect of the invention.

### BRIEF DESCRIPTION OF THE DRAWINGS

The invention will now be described in further detail with reference to the accompanying drawings in which
Fig. 1 illustrates a wind power plant applying a method according to an embodiment of the invention,
Fig. 2 is a block diagram illustrating a method according to an embodiment of the invention,
Fig. 3 illustrates a prioritized list of processing resource requiring tasks, for use in performing a method according to an embodiment of the invention, and
Fig. 4 is a flow chart illustrating a method according to an embodiment of the invention.

### DETAILED DESCRIPTION OF THE DRAWINGS

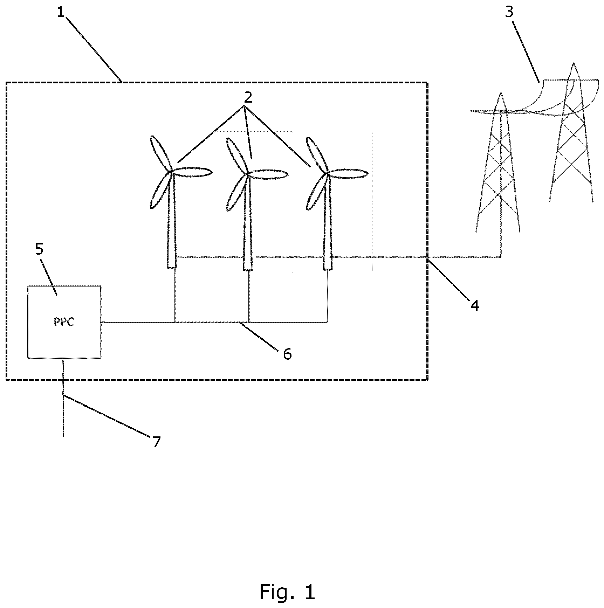

Fig. 1 is a schematic view of a wind power plant 1 comprising a plurality of wind turbines 2, three of which are shown. The wind turbines 2 are connected to a power grid 3 via a point of common coupling 4. Thus, power produced by the wind turbines 2 is supplied to the power grid 3.

The wind turbines 2 are further connected to a power plant controller (PPC) 5 via a communication connection 6. Thus, the PPC 5 may communicate control signals, command signals, etc. to the wind turbines 2, so as to provide overall control of the wind power plant 1. Furthermore, the wind turbines 2 may communicate signals or data to the PPC 5 via the communication connection 6, e.g. in the form of sensor signals, data regarding operation of the wind turbines 2, including power production, etc., in order to allow the PPC 5 to appropriately handle control of the wind power plant 1.

The PPC 5 further receives grid code information related to the power grid 3 via external communication connection 7. This allows the PPC 5 to take the gride code into account when controlling the wind power plant 1, thereby ensuring that the grid code is complied with.

The PPC 5 comprises or is connected to a processing resource (not shown) being shared among the wind turbines 2 of the wind power plant 1. Furthermore, the PPC 5 holds a prioritized list of processing resource requiring tasks being performed by the wind turbines 2, e.g. by specific parts of the wind turbines 2, as part of controlling the wind turbines 2. The prioritized list defines, for each of the tasks, a minimum acceptable service level and at least one action which causes a decrease in processing resource consumption related to the task while ensuring that the minimum acceptable service level is met.

During operation of the wind power plant 1, the PPC 5 monitors a processing load level of the processing resource and compares the processing load level to a first threshold level. In the case that the processing load level exceeds the first threshold level, this is an indication that the capacity limit of the processing resource is approaching, and this introduces a risk that it may not be possible to perform tasks which may be considered critical with respect to control of the wind power plant 1.

Therefore, in order to ensure appropriate control of the wind power plant 1, the PPC 5 selects at least one processing resource requiring task in accordance with the prioritized list. Furthermore, the PPC 5 generates command signals in accordance with at least one action defined for the at least one selected task, and communicates the command signals to the wind turbines 2 being responsible for performing the at least one selected task, via the communication connection 6. Upon receipt of the command signals, the respective wind turbines 2 perform the specified actions, thereby causing a decrease in processing resource consumption and ensuring that sufficient processing capacity is available for performing critical tasks.

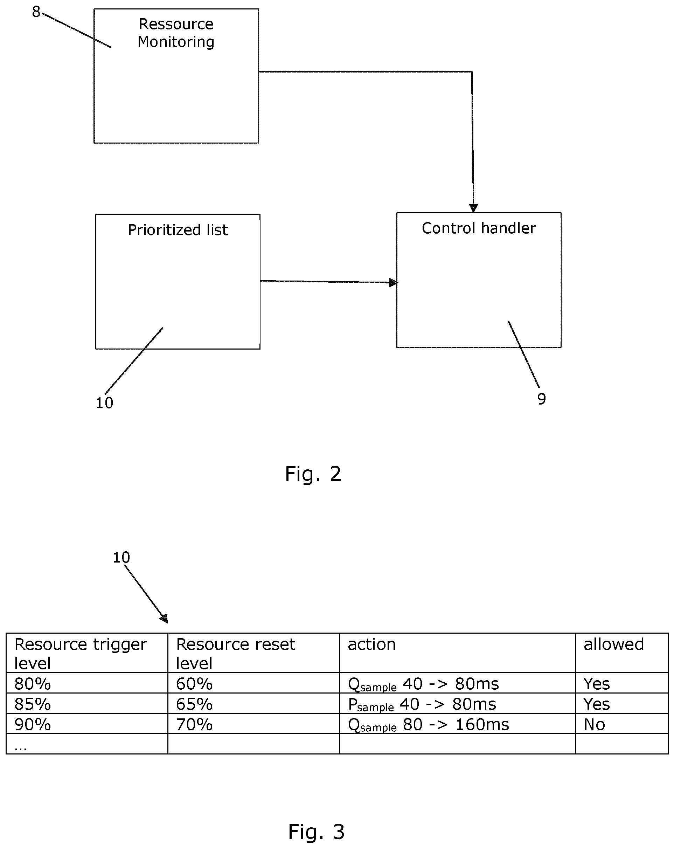

Fig. 2 is a block diagram illustrating a method according to an embodiment of the invention. A resource monitoring unit 8 monitors a processing load level of a processing resource of a wind energy installation, and supplies the monitored processing load level to a control handler 9 being responsible for the control of the wind energy installation. The control handler 9 may, e.g., be or form part of a power plant controller (PPC) of a wind power plant.

Furthermore, a prioritized list 10 of processing resource requiring tasks related to control of the wind energy installation is supplied to the control handler 9. The prioritized list 10 further specifies, for each of the tasks, a minimum acceptable service level related to the task and at least one action which causes a decrease in processing resource consumption related to the task while ensuring that the minimum acceptable service level is met.

In the case that the monitored processing load level exceeds a first threshold level, the control handler 9 selects at least one of the processing resource requiring tasks in accordance with the prioritized list 10, and ensures that at least one of the actions defined by the at least one selected task is performed, so as to ensure that the processing load is reduced without compromising the control of the wind energy installation.

Fig. 3 illustrates a prioritized list 10 of processing resource requiring tasks, for use in performing a method according to an embodiment of the invention. The prioritized list 10 includes two tasks, i.e. reactive power sample loop (Qₛₐₘₚₗₑ) and active power sample loop (Pₛₐₘₚₗₑ). A total of three actions related to these two tasks are listed. These will be described in further detail below. It should, however, be noted that this is merely exemplary, and that the prioritized list 10 may include further tasks and/or further actions.

The prioritized list 10 of Fig. 3 may be applied during control of a wind energy installation, such as a wind power plant, in the following manner.

A processing load level of a processing resource of the wind energy installation is monitored. When the processing load level reaches a threshold value of 80% of the full processing capacity of the processing resource, the task 'Qₛₐₘₚₗₑ' is selected, and an associated action, in the form of a reduction of the sampling rate of the reactive power sample loop is performed. More specifically, the sample rate is reduced from sampling the reactive power every 40 ms to sampling the reactive power every 80 ms. This results in a less accurate control of the reactive power output of the wind energy installation, but the sampling rate is still within an acceptable range. On the other hand, the lower sampling rate decreases the processing resource consumption of the reactive power loop.

In the case that reducing the sampling rate of the reactive power loop as described above is insufficient to cause a desired decrease in the processing load level of the processing resource, the processing load level may increase even further. In the case that the processing load level reaches 85% of the full processing capacity of the processing resource, a further task is selected, in the form of the task 'Pₛₐₘₚₗₑ', and an associated action, in the form of a reduction of the sampling rate of the active power sample loop is performed, by reducing the sample rate from sampling the active power every 40 ms to sampling the active power every 80 ms. This is similar to the reduction of the reactive power described above.

If this is also insufficient to cause a desired decrease in processing load level of the processing resource, the processing load level may continue to increase and reach 90% of the full processing capacity of the processing resource. When this occurs, the task 'Qₛₐₘₚₗₑ' is once again selected, and the action of reducing the sampling rate of the reactive power sample loop even further is performed. In this case the sampling rate is reduced from every 80 ms to every 160 ms.

The actions described above are sequentially discontinued in reverse order if the processing load level of the processing resource decreases appropriately. More particularly, when the processing load level decreases below 70% of the full processing capacity of the processing resource, the sampling rate of the reactive power sample loop is increased from every 160 ms to every 80 ms, when the processing load level decreases below 65% of the full processing capacity of the processing resource, the sampling rate of the active power sampling loop is increased from every 80 ms to every 40 ms, and when the processing load level decreases below 60% of the full processing capacity of the processing resource, the sampling rate of the reactive power sample loop is increased from every 80 ms to every 40 ms.

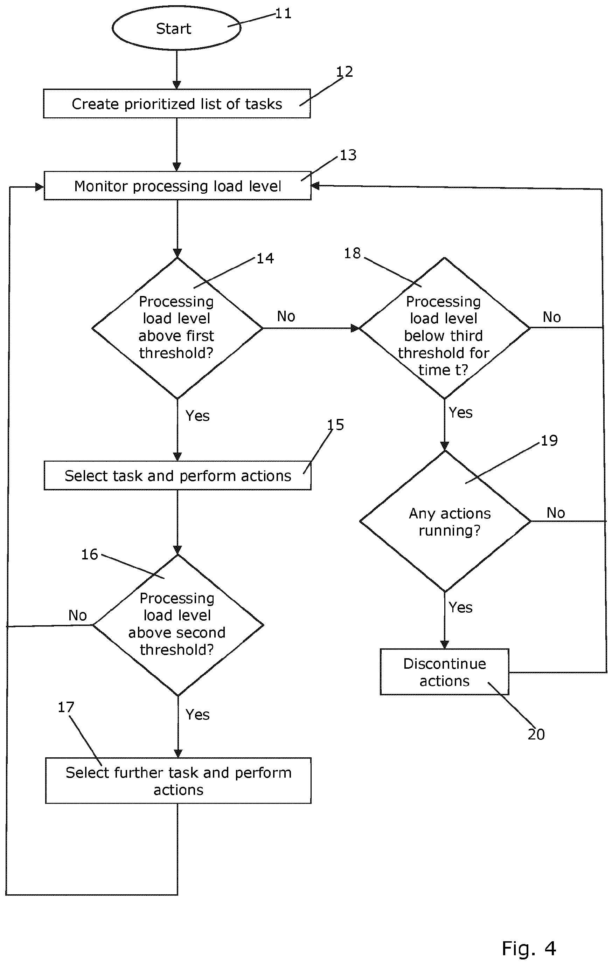

Fig. 4 is a flow chart illustrating a method according to an embodiment of the invention. The process is started at step 11. At step 12 a prioritized list of processing resource requiring tasks related to control of a wind energy installation is created. The prioritized list further defines, for each of the tasks, a minimum acceptable service level related to the task and at least one action which causes a decrease in processing resource consumption related to the task while ensuring that the minimum acceptable service level is met.

At step 13 a processing load level of a processing resource of the wind energy installation is monitored, and at step 14 it is investigated whether or not the monitored processing load level exceeds a first threshold level.

In the case that step 14 reveals that the processing load level exceeds the first threshold level, this is an indication that the load on the processing resource is approaching its limit, and it is therefore necessary to decrease the processing load in order to ensure that sufficient processing capacity is available for performing tasks which are considered critical with respect to control of the wind energy installation. Therefore, the process is forwarded to step 15, where at least one task is selected in accordance with the prioritized list, and at least one action defined by the at least one selected task is performed.

At step 16 it is investigated whether or not the monitored processing load level exceeds a second threshold level being higher than the first threshold level. If this the case, this is an indication that the at least one action being performed at step 15 is insufficient to keep the processing load at an acceptable level. Therefore, the process is forwarded to step 17, where at least one further task is selected in accordance with the prioritized list, and at least one action defined by the at least one further task is performed. The process is then returned to step 13 for continued monitoring of the processing load level, with the actions related to the initially selected tasks as well as the actions related to the further selected tasks running.

In the case that step 16 reveals that the second threshold level has not been exceeded, the process is returned to step 13 for continued monitoring of the processing load level, with only the actions related to the initially selected tasks running.

It should be noted that, in the case that step 14 is revised during continued monitoring of the processing load level, with one or more actions running, and step 14 reveals that the processing load level is still above the first threshold level, this will also cause the process to proceed to step 15 for selection of at least one task and at least one corresponding action, in addition to the at least one task already selected and the at least one action already running.

In the case that step 14 reveals that the processing load level is below the first threshold level, the process is forwarded to step 18, where it is investigated whether or not the monitored processing load level has decreased below a third threshold value which is lower than the first threshold value, and has been so for a predefined time, t. If this is not the case it may be concluded the processing load of the currently running tasks is within an acceptable range, and the process is returned to step 13 for continued monitoring of the processing load level.

In the case that step 18 reveals that the processing load level has been below the third threshold level for the predefined time, t, this is an indication that there is unused processing capacity at the processing resource. Therefore, in this case the process is forwarded to step 19, where it is investigated whether or not any previously initiated actions are running. If this is not the case, the process is simply returned to step 13 for continued monitoring of the processing load level.

In the case that step 19 reveals that previously initiated actions are in fact running, the process is forwarded to step 20, where one or more of the running actions are discontinued, since the processing load level being below the third threshold level, implying that unused processing capacity is available, is an indication that the previously initiated actions are no longer required. Subsequently, the process is returned to step 13 for continued monitoring of the processing load level.

It should be noted that, in the case that two or more actions are running, the running actions may be discontinued sequentially, e.g. in a reversed order as compared to how they were initiated, rather than discontinuing all running actions at once. This will provide a gradual and controlled increase of the processing load level, thereby avoiding that the first threshold limit is immediately exceeded again.

## Claims

1. A method for optimising use of a processing resource in a wind energy installation (1), the method comprising the steps of:
- identifying a plurality of processing resource requiring tasks related to control of the wind energy installation (1),
- for each processing resource requiring task, defining a minimum acceptable service level related to the task, and defining at least one action which causes a decrease in processing resource consumption related to the task while ensuring that the minimum acceptable service level is met,
- ranking the processing resource requiring tasks, so as to create a prioritized list (10) of processing resource requiring tasks,
- monitoring a processing load level of the processing resource and comparing the processing load level to a first threshold level,
- in the case that the monitored processing load level exceeds the first threshold level, selecting at least one of the processing resource requiring tasks in accordance with the prioritized list (10) of processing resource requiring tasks, and performing at least one of the actions defined for the at least one selected task.

2. A method according to claim 1, wherein the step of, for each processing resource requiring task, defining a minimum acceptable service level and/or the step of ranking the processing resource requiring tasks is/are performed in accordance with a grid code applying at a power grid (3) to which the wind energy installation (1) is connected.

3. A method according to claim 1 or 2, wherein the processing resource requiring tasks include active power loop sampling, reactive power loop sampling, power meter measurement sampling, communication tasks, status supervision and/or parameter supervision.

4. A method according to any of the preceding claims, wherein the step of ranking the processing resource requiring tasks comprises ranking the tasks according to criticality with respect to control of the wind energy installation (1).

5. A method according to any of the preceding claims, further comprising the steps of:
- comparing the processing load level to a second threshold level, the second threshold level being higher than the first threshold level, and
- in the case that the processing load level exceeds the second threshold level, selecting at least one further processing resource requiring task in accordance with the prioritized list (10) of processing resource requiring tasks, and performing at least one of the actions defined for the at least one further selected task.

6. A method according to any of the preceding claims, further comprising the steps of:
- comparing the processing load level to a third threshold level, the third threshold level being lower than the first threshold level, and
- in the case that the processing load level decreases below the third threshold level, discontinuing the at least one action defined for the at least one selected task.

7. A method according to any of the preceding claims, further comprising the steps of, based on the performed actions, evaluating available processing power as compared to total required processing power of the processing resource requiring tasks related to control of the wind energy installation (1), and determining whether or not to upgrade the processing resource based on the evaluation.

8. A method according to any of the preceding claims, wherein the wind energy installation is a wind power plant (1) comprising a plurality of wind turbines (2).

9. A system for optimising use of a processing resource in a wind energy installation (1), the system comprising:
- a prioritized list (10) of processing resource requiring tasks related to control of the wind energy installation (1), the prioritized list (10) defining, for each processing resource requiring task, a minimum acceptable service level related to the task and at least one action which causes a decrease in resource consumption related to the task while ensuring that the minimum acceptable service level is met,
- monitoring equipment (8) for monitoring a processing load level of the processing resource, and
- a communication unit configured to generate and communicate command signals to units performing the resource requiring tasks, in accordance with the processing load level of the processing resource and the prioritized list (10),
wherein the system is configured to perform the method according to any of the preceding claims.

10. A system according to claim 9, wherein the system is or comprises a power plant controller (PPC) (5) of a wind power plant (1) comprising a plurality of wind turbines (2).

11. A system according to claim 9 or 10, wherein the system is further configured to receive input regarding a grid code applying at a power grid (3) to which the wind energy installation (1) is connected.
